# FASCICULE DE BREVET EUROPEEN

(11) **EP 3 692 517 B1**
(45) Date de publication et mention de la délivrance du brevet: **06.07.2022**
(21) Numéro de dépôt: 18778506.8
(22) Date de dépôt: 02.10.2018
(51) Int. Cl.: G09B 9/12

(54) **DISPOSITIF DE SIMULATION DE FREINAGE POUR SIMULATEUR ET MÉTHODE ASSOCIÉE**
BREMSSIMULATIONSVORRICHTUNG FÜR EINEN SIMULATOR UND ZUGEHÖRIGES VERFAHREN
BRAKING SIMULATION DEVICE FOR A SIMULATOR AND ASSOCIATED METHOD

(30) Priorité: 05.10.2017 FR 1701032
(43) Date de publication de la demande: 12.08.2020
(73) Titulaire: Thales, 92400 Courbevoie (FR)
(72) Inventeur: DAVIEAU, Matthieu, 92400 Courbevoie (FR); LE GUILLOU, René, 78310 Maurepas (FR)
(74) Mandataire: Marks & Clerk France
(86) Numéro de dépôt international: PCT/EP2018/076716
(87) Numéro de publication internationale: WO 2019/068670

(56) Documents cités:
- EP-A1- 0 771 705
- EP-A1- 2 818 371
- EP-A2- 1 138 564
- EP-A2- 2 020 652
- FR-A1- 2 884 183

## Description

### Domaine technique

L'invention concerne le domaine des simulateurs, en particulier celui des simulateurs aéronautiques, et propose un dispositif adapté à la simulation du système de freinage au pied sur les pédales de palonniers.

### Etat de la technique

Les principales normes de certification des simulateurs sont régies par différents organismes tels l'agence européenne de la sécurité aérienne ou (EASA) pour « European Aviation Safety Agency », l'administration de l'aviation civile aux Etats-Unis ou (FAA) pour « Federal Aviation Administration », ou l'organisation de l'aviation civile internationale ou (ICAO) pour « International Civil Aviation Organization ». L'obtention d'une certification pour les simulateurs dits (FFS) pour « full flight simulator » impose des exigences fortes en termes de représentativité du cockpit. Ainsi lorsqu'ils sont décrits dans les procédures du manuel de vol, le comportement et l'aspect des commandes du simulateur doivent être strictement fidèles au porteur réel.

Ces normes de certification, mais également les pilotes utilisateurs des simulateurs, demandent un réalisme maximal, et ce critère est un différenciateur technique sur le marché. Dans ce contexte, le comportement associé à l'utilisation des différentes commandes doit être simulé le plus fidèlement possible. En particulier, la simulation d'un système de freinage à pédales doit entre autre, prendre en compte la mise en pression du circuit hydraulique suivant les actions des pilotes. En effet, pour certains types de porteurs, lors des opérations de roulage sur piste, la pression du circuit hydraulique de freinage peut évoluer dynamiquement, résultant en un accroissement ou une réduction de l'effort ressenti par les pilotes sur les pédales de frein. Aussi, il est nécessaire d'adapter dynamiquement la course de débattement de la pédale et le retour de force ressenti sous le pied des pilotes pendant une session d'entrainement au pilotage ou au roulage.

Les solutions actuelles de simulation de freinage pour les porteurs concernés par du freinage au pied, sont des solutions à base de composants hydrauliques ou des solutions électriques partiellement fidèles, ne répliquant qu'un fonctionnement stable des freins sans répliquer la variation de pression du circuit hydraulique.

Certains simulateurs d'avion sont équipés de moteurs dits « brushless » pilotés par des variateurs pour simuler le comportement des freins, mais cette solution est lourde en termes de mise en œuvre, car elle requière un encombrement important pour l'installer dans la soute technique située sous le plancher du cockpit simulé. De plus, les couples moteurs/variateurs sont des solutions coûteuses. Le document EP 2 818 371 A1 (NISSAN MOTOR) décrit un système connu de l'art antérieur.

Enfin, dans le domaine de la simulation, les utilisateurs demandent des équipements moins énergivores, toujours plus respectueux de l'environnement et dont l'entretien ne nécessite pas de compétentes spécifiques. Cette tendance impose de concevoir des simulateurs sans énergie hydraulique, cette énergie nécessitant des agents d'entretien qualifiés et habilités, et générant alors des contraintes règlementaires.

La difficulté est de trouver une solution avec des performances comparables en utilisant essentiellement des composants mécaniques ou électriques, sans perturber la dynamique du palonnier, en respectant parfaitement la cinématique des pédales du porteur réel, sans réduire ou impacter le champ de vision des pilotes, à un coût compétitif et qui soit implémentable dans un espace très restreint autour des pédales.

Il est alors nécessaire de simuler les systèmes hydrauliques d'un hélicoptère ou autre porteur, et notamment les pédales de freins, avec des solutions sans hydraulique qui pourtant doivent être parfaitement représentatives du comportement réel. Aussi, il existe le besoin de solutions de simulation telles que le point de vue du pilote dans le simulateur soit identique au porteur réel. Une telle solution doit être compacte, de faible encombrement, installée discrètement dans la zone des pédales, facile à installer, à mettre au point, et à maintenir.

La solution doit permettre une réponse rapide, et avoir une excellente répétabilité, sans dériver. Enfin, il est nécessaire d'utiliser des solutions à faible coût d'achat et d'exploitation permettant d'être compétitif sur le marché de la simulation.

La présente invention propose de répondre aux besoins précités.

### Résumé de l'invention

Un objet de la présente invention est de proposer un dispositif qui permet de simuler le freinage au pied sur les pédales de palonnier.

Avantageusement, le dispositif de l'invention est intégralement sans hydraulique et est composé d'un équipement mécanique associé à un équipement électrique.

Avantageusement, la partie mécanique et la partie électrique sont mises en œuvre par un logiciel de simulation de manière combinée, et selon la situation du porteur qui est simulé, qu'il soit en vol ou posé au sol.

Avantageusement, le dispositif de l'invention permet de fournir aux pilotes des sensations représentatives de toutes les situations décrites dans un manuel de vol, et particulièrement les situations incluant la mise en pression du circuit hydraulique de freinage qui résulte en un accroissement de l'effort que le pilote applique avec son pied, et en une réduction de la course de débattement de la pédale.

L'invention trouvera une application avantageuse dans le domaine des simulateurs de vol, et en particulier pour les simulateurs de porteurs ayant des freins de roues qui ne sont pas électriques, tels des hélicoptères.

A cet effet, l'invention a pour objet un dispositif de simulation de freinage au pied comprenant :
- un module de freinage mécanique apte à fournir une valeur d'effort linéaire en réponse à un appui sur une pédale de frein;
- un module de friction électromagnétique apte à fournir une valeur de force de frottement en réponse audit appui sur la pédale de frein ;
- un module logiciel de calcul apte à combiner les valeurs issues des modules de freinage mécanique et de friction électromagnétique pour calculer une valeur d'asservissement, et générer un retour de force variable sur ladite pédale de frein en fonction de la valeur d'asservissement.

Selon des modes de réalisation :
- le module de freinage mécanique comprend un ressort apte à fournir une valeur d'effort linéaire proportionnelle à la raideur du ressort ;
- le module de freinage mécanique comprend un ensemble de ressorts générant plusieurs raideurs à différents endroits de la course de la pédale de frein ;
- le module de friction électromagnétique comprend un frein à poudre apte à fournir une valeur de force de frottement lors de la rotation du moteur du frein à poudre ;
- le frein à poudre électromagnétique reçoit un courant électrique variable ;
- le module de freinage mécanique comprend un premier capteur apte à fournir une valeur représentative de la position de la pédale, et un second capteur apte à fournir une valeur représentative de l'effort appliqué sur la pédale.

L'invention couvre aussi un palonnier équipé de deux pédales, chaque pédale comprenant un dispositif tel que revendiqué.

L'invention couvre aussi un simulateur d'hélicoptère ayant au moins un palonnier équipé de deux pédales, chaque pédale comprenant un dispositif tel que revendiqué.

Plus généralement, l'invention couvre un simulateur d'aéronef comprenant au moins un dispositif tel que revendiqué.

Un autre objet de l'invention est un procédé de simulation de freinage au pied, comprenant les étapes suivantes:
- détecter un appui sur une pédale de frein ;
- générer une valeur relative à un effort linéaire produit en réponse audit appui sur la pédale de frein;
- générer une valeur relative à une force de frottement électromagnétique produite en réponse audit appui sur la pédale de frein ;
- calculer une valeur d'asservissement à partir des valeurs d'effort linéaire et de frottement électromagnétique ; et
- générer un retour de force variable sur ladite pédale de frein selon la valeur d'asservissement.

Selon des modes de réalisation :
- l'étape de générer une valeur relative à un effort linéaire consiste à générer ladite valeur à partir de données issues d'un module de freinage mécanique couplé à la pédale de frein ;
- l'étape de générer une valeur relative à une force de frottement électromagnétique consiste à générer ladite valeur à partir de données issues d'un module de friction électromagnétique couplé à la pédale de frein et au module de freinage mécanique ;
- l'étape de calculer une valeur d'asservissement consiste à déterminer une valeur d'effort complémentaire à fournir par le frein électromagnétique en déduisant la valeur de l'effort linéaire du ressort de l'effort total demandé afin de déterminer quelle valeur d'électricité fournir au frein électromagnétique.

L'invention dans un autre aspect couvre un produit programme d'ordinateur comprenant des instructions de code permettant d'effectuer les étapes du procédé de simulation de freinage tel que revendiqué lorsque ledit programme est exécuté sur un ordinateur. Elle couvre aussi un produit programme d'ordinateur de simulation d'aéronef comprenant un produit programme d'ordinateur de simulation de freinage tel que revendiqué.

### Description des figures

Différents aspects et avantages de l'invention vont apparaitre en appui de la description d'un mode préféré d'implémentation de l'invention mais non limitatif, avec référence aux figures ci-dessous :
Les figures 1a et 1b montrent respectivement une vue avant d'un palonnier réel et d'un palonnier de simulation équipé du dispositif de freinage de l'invention dans un mode de réalisation ;
Les figures 2a et 2b montrent respectivement une vue arrière d'un palonnier réel et d'un palonnier de simulation équipé du dispositif de freinage de l'invention dans un mode de réalisation ;
La figure 3 est une représentation cinématique du dispositif de l'invention dans un mode de réalisation ;
La figure 4 illustre les étapes de mise en œuvre du dispositif de l'invention dans un mode de réalisation ; et
La figure 5 illustre différentes lois d'effort sur un exemple de pédale d'hélicoptère.

### Description détaillée de l'invention

D'une manière générale, l'invention propose un dispositif de freinage pour simulateur qui combine la restitution de deux types d'efforts, des efforts provenant d'un agencement mécanique et des efforts provenant d'un agencement électrique. Dans une implémentation préférentielle, les efforts « mécaniques » sont restitués par des ressorts et les efforts « électriques » sont restitués par un frein à poudre électromagnétique. Cette combinaison mécanique/électrique permet de restituer en toutes situations avec précision le comportement dynamique du système de frein d'un porteur réel. La partie mécanique du dispositif est conçue pour respecter la cinématique du palonnier dans toutes les configurations de réglages, tout en limitant l'impact du mécanisme en termes de masse et de dynamique sur la pédale.

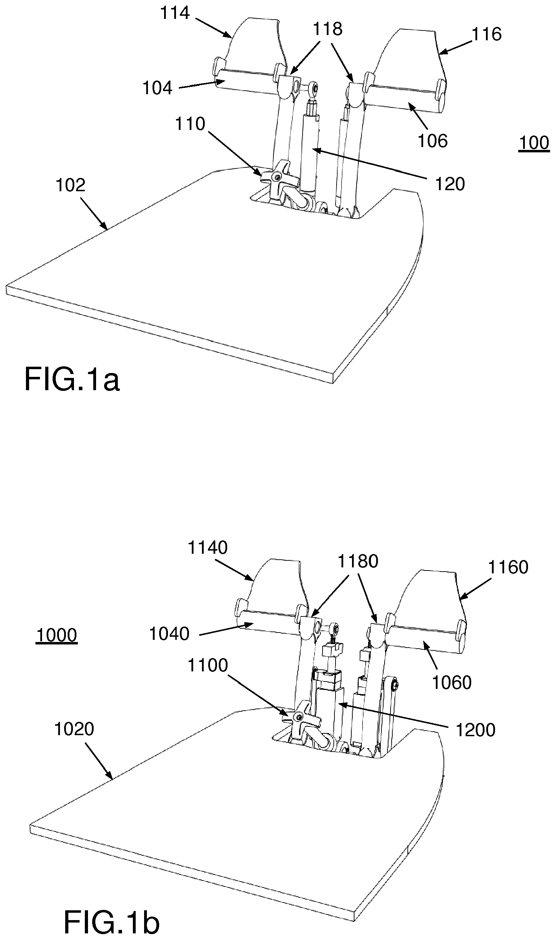

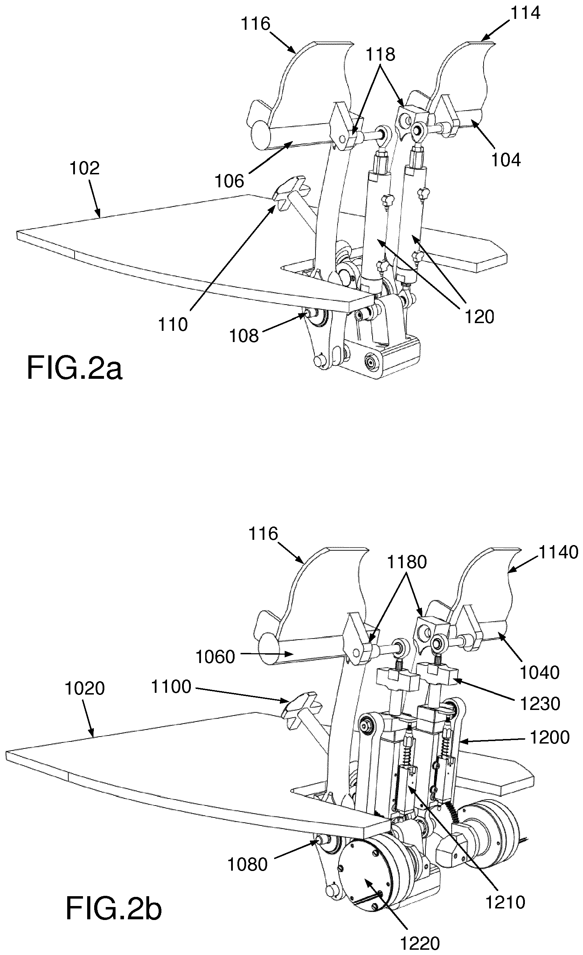

Les figures 1a et 1b montrent respectivement une vue avant d'un palonnier réel et d'un palonnier de simulation équipé du dispositif de freinage de l'invention, et les figures 2a et 2b montrent respectivement une vue arrière d'un palonnier réel et d'un palonnier de simulation équipé du dispositif de freinage de l'invention. Par souci de clarté, les mêmes éléments portent les mêmes références dans les différentes figures.

En aéronautique, le palonnier (100) est l'une des commandes de vol principale située dans le poste de pilotage d'un porteur (avion ou hélicoptère). Il est généralement fixé à une structure plancher (102), et comprend deux pédales (104, 106), une pour chaque pied, permettant au pilote d'actionner la gouverne de direction d'un avion, d'un planeur, ou le rotor anticouple d'un hélicoptère. Cela permet de contrôler l'appareil sur l'axe de lacet, les mouvements sur les axes de tangage et de roulis étant assurés au moyen du manche (non illustré).

Ces pédales de lacet ont un point de rotation (108) et sont mécaniquement combinées telles que, lorsque le pilote appuie et déplace par exemple la pédale gauche vers l'avant pour la commande de lacet, la pédale droite se déplace vers l'arrière.

La structure de palonnier comprend aussi un système de réglage d'avant en arrière actionné par une molette de réglage (110) pour s'ajuster à la taille des pilotes. L'usage de cette fonction influe sur la cinématique du palonnier, et fait varier notamment les inclinaisons de pédales, ce qui complexifie les cas de simulation possibles et accroit l'importance du respect par le palonnier simulé, de la géométrie du palonnier réel. En simulation, le réglage du palonnier est défini avant le début de l'exercice et n'évolue pas pendant l'entrainement.

Dans les cockpits à double commande, chaque pilote a deux pédales de lacet (104, 106), chaque pédale permettant de contrôler la commande de lacet de l'hélicoptère. Les deux jeux de pédales peuvent être montés sur un même châssis ou sur deux châssis séparés, mais les palonniers pilote et copilote sont conjugués, et se déplacent ensemble.

Dans un hélicoptère équipé de roues, tel que représenté sur les figures 1a-1b et 2a-2b, chacune des pédales de lacet (104, 106 des figures 1a-2a) et (1040, 1060 des figures 1b-2b) est équipée à son extrémité supérieure d'une pédale de frein (114, 116 des figures 1a-2a) et (1140, 1160 des figures 1b-2b). Une pédale de frein (du palonnier réel ou de simulation) est activée par le pilote (ou copilote) en appuyant le pied sur le haut de la pédale de lacet autour d'un axe de rotation (118, 1180). Les pédales de frein ne sont pas combinées, et sont mécaniquement indépendantes.

Sur un palonnier réel (figures 1a et 2a), l'appui sur une pédale de frein entraine la mise en pression du circuit hydraulique du système de freinage (120). Sur le palonnier de simulation (figures 1b et 2b), l'appui sur une pédale de frein active le dispositif de l'invention (1200) qui permet de simuler le système de freinage, et en particulier simuler le pompage hydraulique.

Chaque pédale de frein du palonnier de simulation est équipée du dispositif de l'invention (1200) qui en combinant une action mécanique et une action électrique permet de fournir un retour de force variable. Le principe du retour de force consiste à récupérer des données fournies par le système et l'utilisateur, les transmettre à une plateforme de calcul, qui génère une force de rétroaction correspondant à celle qui serait ressentie en opération réelle. La variabilité permet d'ajuster l'effort en temps réel pour qu'il corresponde à toutes les situations rencontrées par un pilote lors des phases de vol, de roulage ou de parking, pour les cas de fonctionnement normal, dégradé, et de panne. Le système et l'utilisateur sont ainsi reliés par un flux de données informatiques converti en mouvement mécanique sur l'utilisateur comme sur le système.

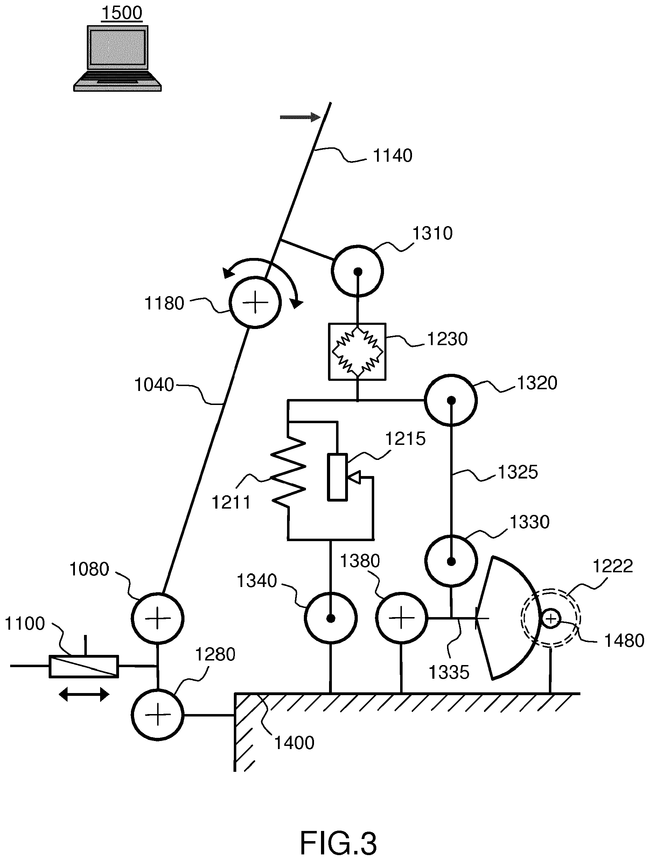

Dans un mode de réalisation préférentielle, le dispositif de l'invention consiste à avoir pour chacune des pédales du cockpit simulé, l'installation en parallèle d'un module de freinage mécanique (1210) et d'un module de friction électromagnétique (1220). Le système de simulation comprend de plus de manière conventionnelle des capteurs (1215, 1230), des bielles et liaisons (représentés sur la figure 3), afin de préserver la cinématique et les réglages du palonnier réel. Avantageusement, toutes les rotules et les pivots sont des liaisons sans jeu et à très faible frottement.

Dans un simulateur d'hélicoptère à double palonnier, un dispositif de l'invention est installé sur chacune des quatre pédales de frein de l'hélicoptère simulé car elles sont actionnables indépendamment.

Il est aussi associé au dispositif, un logiciel de simulation opérant sur un ordinateur (1500) qui reçoit, de manière filaire ou sans fil, les informations issues des différents capteurs, afin de calculer un asservissement pour adapter la pression à appliquer au système de freinage. Le logiciel de simulation comprend un module qui permet de définir une loi de restitution d'effort qui est à appliquer lors de l'opération de simulation et qui est fonction du scénario de simulation en cours. Avantageusement, contrairement aux systèmes connus, le système de l'invention permet de restituer une loi d'effort (Fc) qui est variable en temps réel. En effet, au-delà des exigences de certification qui limitent la représentativité à un seul cas de freinage, le système de l'invention permet de restituer l'ensemble des lois d'efforts qu'un pilote peut rencontrer sur un hélicoptère réel.

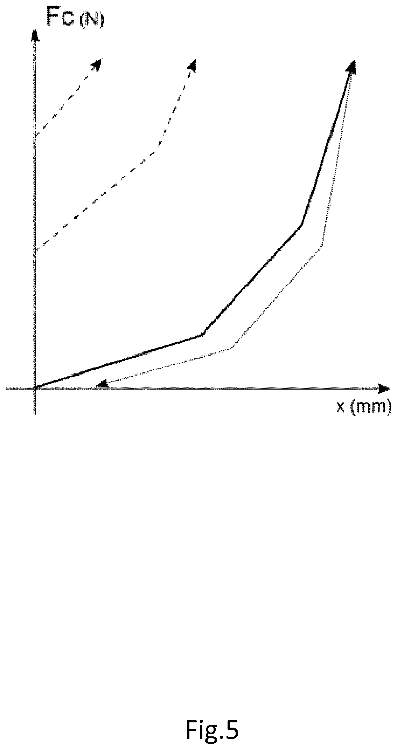

La figure 5 illustre différentes lois d'effort sur un exemple de pédale d'hélicoptère AW139. L'effort d'appui sur la pédale en ordonnée est exprimé en Newton (N) et l'abscisse correspond au déplacement x de la pédale en millimètre (mm).

La courbe en gras décrit la loi d'effort lorsque le pilote appuie sur une pédale lors du roulage de l'hélicoptère sur piste. Cette courbe est assujettie à certification et est comparée à celle de l'hélicoptère réel. Elle peut être linéaire ou plus complexe. Contrairement au dispositif de l'invention, les systèmes classiques de restitution par ressort uniquement ne permettent pas de restituer une courbe comprenant plus de deux pentes de raideur et ne sont donc théoriquement pas certifiables le cas échéant.

La courbe du bas de retour de la pédale présente une hystérésis. Contrairement au dispositif de l'invention, les systèmes classiques de restitution par ressort uniquement ne permettent pas de restituer ce phénomène. Cependant il est perceptible par les pilotes et il concoure à l'immersivité du simulateur.

Les courbes du haut en pointillés s'appliquent lorsque la mise en pression du circuit hydraulique de freinage est simulée selon le procédé de l'invention, par appuis successifs sur la pédale. Ces courbes sont tracées dynamiquement en fonction de la pression exercée sur la pédale. Contrairement au dispositif de l'invention, les systèmes classiques de restitution par ressort uniquement ne permettent pas restituer ce phénomène, bien qu'il soit décrit dans les procédures du manuel de vol et doit donc en principe être assujetti à certification.

La figure 3 est une représentation schématique de la cinématique du dispositif de l'invention dans un mode de réalisation. Par souci de clarté, tous les éléments constituant des liaisons pivots guidant en rotation une pièce en ne permettant qu'une rotation autour de l'axe de la liaison, sont représentés par un cercle contenant une croix (1080, 1180, 1280, 1380, 1480), et tous les éléments constituant des liaisons rotules liant complètement deux pièces en translation mais les laissant libres en rotation sont représentés par un cercle contenant un point (1310, 1320, 1330, 1340). Ainsi par exemple, la pédale de lacet (1040) est articulée à son extrémité inférieure par une liaison pivot (1080), la pédale de frein (1140) est articulée par une liaison pivot (1180) et est couplée à un capteur d'effort (1230) par une liaison rotule frein/capteur (1310).

Le dispositif de l'invention comprend un module de freinage mécanique (1210) couplé à un module friction électromagnétique (1220). Le module de freinage mécanique (1210) fournit une mesure d'effort linéaire en réponse à un appui sur la pédale de frein. Dans une implémentation préférentielle, le module de freinage mécanique comprend un ressort (1211) et la mesure de l'effort linéaire produit est une valeur proportionnelle à la raideur du ressort. Dans une variante d'implémentation, le module mécanique comprend un ensemble de ressorts ou de rondelles élastiques. Plusieurs ressorts peuvent être impliqués lors de l'appui sur la pédale de frein, générant plusieurs raideurs à différents endroits de la course de la pédale. La mesure de l'effort produit est alors une valeur qui prend en compte les différentes raideurs.

Le module de freinage mécanique comprend de plus un premier capteur (1215) qui permet de récupérer une valeur représentative de la course de la pédale, et un second capteur (1230) qui permet de récupérer l'effort appliqué par le pied du pilote sur la pédale.

Il est à noter que les solutions connues qui utilisent uniquement ce montage de simulation de freinage purement mécanique, imposent qu'à une position de la pédale donnée, il correspond un effort donné sur la pédale. Ces solutions ne permettent alors pas de faire varier dynamiquement l'effort sur la pédale, contrairement au dispositif de l'invention.

Ainsi avantageusement, le dispositif de l'invention comprend de plus un module de friction électromagnétique (1220) couplé au module de freinage mécanique.

Dans une implémentation préférentielle, le module de friction électromagnétique comprend un frein à poudre électromagnétique (1222).

L'homme du métier connait le principe d'un frein à poudre magnétique qui de manière générale comprend deux rotors indépendants l'un de l'autre. Le rotor externe contient une bobine toroïdale alimentée en électricité par courant continu. Entre les rotors, se trouve une poudre magnétisée. Par la mise sous électricité de la bobine, en raison de la magnétisation, les grains de la poudre prennent la forment d'une chaîne. La raideur de cette chaîne varie avec son champ magnétique et est directement proportionnelle à l'électricité fournie. De cette manière, il résulte une forte adhérence du frein entre les deux rotors, qui enchaîne un couple de transmission proportionnel à l'électricité fournie.

De manière préférentielle, le frein à poudre électromagnétique est dans une position fixe sur la structure plancher afin que son poids n'affecte pas l'inertie et la dynamique du palonnier. Le frein à poudre électromagnétique (1222) est couplé à un réducteur (1335) pivotant autour d'un axe de rotation (1380). Le réducteur (1335) est couplé à une bielle (1325) via une liaison rotule réducteur/bielle (1330). La bielle (1325) est couplée au module de freinage mécanique (1210) (ressort et capteurs d'effort et de position) via une liaison rotule bielle/capteur (1320).

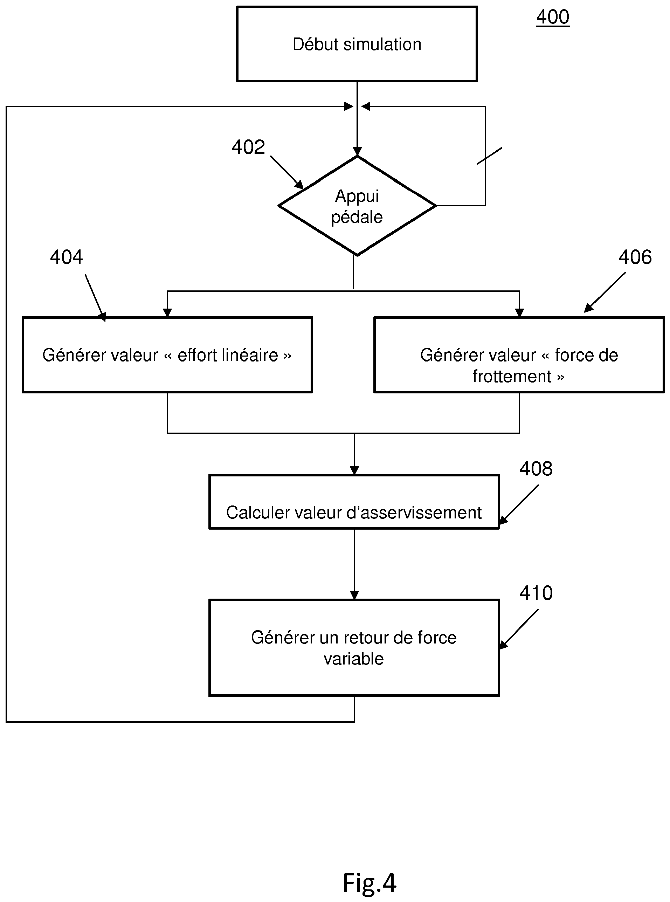

En opération de simulation (400), tel que représenté par la figure 4, quand le pilote appuie sur la pédale de frein (402), le ressort (1211) du module de freinage mécanique est comprimé. Le capteur linéaire (1215) fournit une mesure d'effort linéaire qui est proportionnel à la raideur du ressort et à la course d'appui. Le capteur d'effort (1230) est apte à fournir des mesures représentatives de l'effort qui est appliqué par le pilote sur la pédale. L'appui sur la pédale de frein est caractérisé par l'acquisition des mesures du capteur linéaire et du capteur d'effort. L'appui sur la pédale de frein entraine simultanément la bielle (1325) du module de friction électromagnétique à déplacer la liaison rotule réducteur/bielle (1330), faisant pivoter le réducteur (1335). Ceci entraine une rotation de l'axe du frein à poudre électromagnétique, qui fait tourner le frein à poudre électromagnétique (1222). La rotation du frein génère un frottement. Le couple résistant du frein à poudre (qui est proportionnel à l'électricité fournie), induit un effort résistant qui se répercute jusqu'à la pédale de frein et s'ajoute à l'effort linéaire du ressort.

L'effort linéaire qui est produit (404) par le module de freinage mécanique et la force de frottement qui est provoquée (406) par le module de friction électromagnétique sont transmis au module de calcul où ils sont combinés afin de générer une valeur de retour de force variable (410).

Le module de calcul permet de calculer une valeur d'asservissement (408) à partir des informations issues des deux modules de freinage mécanique et de friction électromagnétique, et adapter la pression à mettre dans le système de freinage afin de produire un effort dynamique sur la pédale de freinage, en fonction de la loi de restitution d'effort qui a été définie pour le scénario de la simulation.

Par ailleurs dans le cadre d'une certification, le procédé permet restituer par transformée mathématique les valeurs d'effort et de déplacement au niveau du point d'appui sur la pédale, afin de pouvoir les comparer à des données mesurées sur un hélicoptère réel.

L'effort (Fvariable) que le frein à poudre doit appliquer ou valeur d'asservissement est obtenu par soustraction de l'effort (Fr = k.x) du ressort de raideur 'k', à la loi d'effort de consigne (Fc) définie pour le scénario en cours. De cette valeur (Fvariable), il est déduit le courant électrique à fournir au frein à poudre. De manière préférentielle, l'asservissement est filtré par une fonction intégrale, pour éviter que dès l'augmentation de l'effort du frein, la soustraction (Fc - Fr) passe à zéro.

La friction générée par le frein à poudre peut ainsi être ajustée dynamiquement en fonction du courant électrique qui alimente le frein à poudre électromagnétique. En effet, la raideur de la chaîne formée par les grains de poudre varie avec son champ magnétique et est directement proportionnelle à l'électricité fournie. Quand le pilote n'appuie plus sur la pédale de frein, le courant électrique qui alimente le frein à poudre électromagnétique s'annule. Quand le courant électrique est nul, la friction du frein à poudre est très faible, et le ressort (1211) ramène la pédale de frein (1140) dans sa position initiale de repos.

Par ailleurs, afin d'accroître la rotation du frein à poudre, il est possible d'appliquer un rapport de réduction.

La solution décrite assure une conformité à toutes les exigences, en termes d'espace, de fonctionnalités, de performances, de choix technologiques et de coûts. Dans une application industrielle, cette solution répond aux exigences de simulation des freins de l'hélicoptère AugustaWestland AW139 pour une qualification « level D» suivant les normes européennes et américaines.

La présente description illustre un mode de réalisation préférentielle de l'invention, mais n'est pas limitative. Un exemple a été choisi pour permettre une bonne compréhension des principes de l'invention, et une application concrète, mais n'est pas exhaustif et la description permet à l'homme du métier d'apporter des modifications pour d'autres variantes d'implémentation. Ainsi par exemple, il est possible d'ajouter au dispositif décrit un système d'engrenages pour créer un rapport de réduction et augmenter la rotation du frein à poudre électromagnétique en gardant les mêmes principes. Le dispositif dans ses variantes trouvera aussi application sur des simulateurs de véhicules pour simuler le freinage.

## Revendications

1. Un dispositif de simulation de freinage au pied comprenant :
- un module de freinage mécanique (1210) apte à fournir une valeur d'effort linéaire en réponse à un appui sur une pédale de frein;
- un module de friction électromagnétique (1220) comprenant un frein à poudre apte à fournir une valeur de force de frottement lors de la rotation du moteur du frein à poudre, en réponse audit appui sur la pédale de frein ; et
- un module logiciel de calcul apte à combiner les valeurs issues des modules de freinage mécanique et de friction électromagnétique pour calculer une valeur d'asservissement, et générer un retour de force variable sur ladite pédale de frein en fonction de la valeur d'asservissement.

2. Le dispositif selon la revendication 1 dans lequel le module de freinage mécanique comprend un ressort apte à fournir une valeur d'effort linéaire proportionnelle à la raideur du ressort.

3. Le dispositif selon la revendication 1 ou 2 dans lequel le module de freinage mécanique comprend un ensemble de ressorts générant plusieurs raideurs à différents endroits de la course de la pédale de frein.

4. Le dispositif selon l'une quelconque des revendications 1 à 3 dans lequel le frein à poudre électromagnétique reçoit un courant électrique variable.

5. Le dispositif selon l'une quelconque des revendications 1 à 4 dans lequel le module de freinage mécanique comprend un premier capteur apte à fournir une valeur représentative de la position de la pédale, et un second capteur apte à fournir une valeur représentative de l'effort appliqué sur la pédale.

6. Un palonnier équipé de deux pédales, chaque pédale comprenant un dispositif selon l'une quelconque des revendications 1 à 5.

7. Un simulateur d'hélicoptère ayant au moins un palonnier équipé de deux pédales, chaque pédale comprenant un dispositif selon l'une quelconque des revendications 1 à 5.

8. Un simulateur d'aéronef comprenant au moins un dispositif selon l'une quelconque des revendications 1 à 5.

9. Un procédé de simulation de freinage au pied mis en œuvre par ordinateur sur un dispositif selon l'une quelconque des revendications 1 à 5, comprenant les étapes suivantes:
- détecter un appui sur une pédale de frein ;
- générer une valeur relative à un effort linéaire produit en réponse audit appui sur la pédale de frein;
- générer une valeur relative à une force de friction électromagnétique produite en réponse audit appui sur la pédale de frein ;
- calculer une valeur d'asservissement à partir des valeurs d'effort linéaire et de friction électromagnétique ; et
- générer un retour de force variable sur ladite pédale de frein selon la valeur d'asservissement.

10. Le procédé selon la revendication 9 dans lequel l'étape de générer une valeur relative à un effort linéaire consiste à générer ladite valeur à partir de données issues d'un module de freinage mécanique couplé à la pédale de frein.

11. Le procédé selon la revendication 9 ou 10 dans lequel l'étape de générer une valeur relative à une force de friction électromagnétique consiste à générer ladite valeur à partir de données issues d'un module de friction électromagnétique couplé à la pédale de frein et au module de freinage mécanique.

12. Le procédé selon l'une quelconque des revendications 9 à 11 dans lequel l'étape de calculer une valeur d'asservissement consiste à déterminer une valeur de courant électrique à fournir au frein électromagnétique.

13. Un produit programme d'ordinateur comprenant des instructions de code permettant d'effectuer les étapes du procédé de simulation de freinage selon l'une quelconque des revendications 9 à 12, lorsque ledit programme est exécuté sur un ordinateur.

14. Un produit programme d'ordinateur de simulation d'aéronef comprenant un produit programme d'ordinateur de simulation de freinage selon la revendication 13.

## Patentansprüche

1. Fußbremssimulationsvorrichtung, umfassend:
- ein mechanisches Bremsmodul (1210), das dafür geeignet ist, einen linearen Kraftausübungswert als Reaktion auf einen Druck auf ein Bremspedal zu liefern;
- ein elektromagnetisches Reibungsmodul (1220), umfassend eine Pulverbremse, die dafür geeignet ist, als Reaktion auf den Druck auf das Bremspedal einen Reibungskraftwert bei der Drehung des Pulverbremsenmotors zu liefern; und
- ein Softwarerechenmodul, das dafür geeignet ist, die aus dem mechanischen Bremsmodul und dem elektromagnetischen Reibungsmodul ausgegebenen Werte zu kombinieren, um einen Steuerungswert zu berechnen, und eine variable Kraftrückkopplung auf das Bremspedal in Abhängigkeit von dem Steuerungswert zu erzeugen.

2. Vorrichtung nach Anspruch 1, wobei das mechanische Bremsmodul eine Feder umfasst, die dafür geeignet ist, einen zur Steifigkeit der Feder proportionalen linearen Kraftausübungswert bereitzustellen.

3. Vorrichtung nach Anspruch 1 oder 2, wobei das mechanische Bremsmodul einen Federsatz umfasst, der mehrere Steifigkeiten an verschiedenen Stellen des Bremspedalweges erzeugt.

4. Vorrichtung nach einem der Ansprüche 1 bis 3, wobei die elektromagnetische Pulverbremse einen variablen elektrischen Strom aufnimmt.

5. Vorrichtung nach einem der Ansprüche 1 bis 4, wobei das mechanische Bremsmodul einen ersten Sensor, der dafür geeignet ist, einen für die Position des Pedals repräsentativen Wert bereitzustellen, und einen zweiten Sensor umfasst, der dafür geeignet ist, einen für die an das Pedal angelegte Kraftausübung repräsentativen Wert bereitzustellen.

6. Ausgleichshebel, der mit zwei Pedalen ausgestattet ist, wobei jedes Pedal eine Vorrichtung nach einem der Ansprüche 1 bis 5 umfasst.

7. Helikoptersimulator mit mindestens einem Ausgleichshebel, der mit zwei Pedalen ausgestattet ist, wobei jedes Pedal eine Vorrichtung nach einem der Ansprüche 1 bis 5 umfasst.

8. Luftfahrzeugsimulator, umfassend mindestens eine Vorrichtung nach einem der Ansprüche 1 bis 5.

9. Fußbremssimulationsverfahren, das von einem Computer an einer Vorrichtung nach einem der Ansprüche 1 bis 5 ausgeführt wird, umfassend die folgenden Schritte:
- Erkennen eines Drucks auf ein Bremspedal;
- Erzeugen eines Wertes betreffend eine lineare Kraftausübung, die als Reaktion auf den Druck auf das Bremspedal erzeugt wird;
- Erzeugen eines Wertes betreffend eine elektromagnetische Reibungskraft, die als Reaktion auf den Druck auf das Bremspedal erzeugt wird;
- Berechnen eines Steuerungswertes anhand der linearen Kraftausübungswerte und elektromagnetischen Reibungswerte; und
- Erzeugen einer variablen Kraftrückkopplung auf das Bremspedal gemäß dem Steuerungswert.

10. Verfahren nach Anspruch 9, wobei der Schritt des Erzeugens eines Wertes betreffend eine lineare Kraft darin besteht, den Wert anhand von Daten zu erzeugen, die aus einem mit dem Bremspedal gekoppelten mechanischen Bremsmodul ausgegeben werden.

11. Verfahren nach Anspruch 9 oder 10, wobei der Schritt des Erzeugens eines Wertes betreffend eine elektromagnetische Reibungskraft darin besteht, den Wert anhand von Daten zu erzeugen, die aus einem mit dem Bremspedal und mit dem mechanischen Bremsmodul gekoppelten elektromagnetischen Reibungsmodul ausgegeben werden.

12. Verfahren nach einem der Ansprüche 9 bis 11, wobei der Schritt des Berechnens eines Steuerungswertes darin besteht, einen der elektromagnetischen Bremse zu liefernden elektrischen Stromwert zu bestimmen.

13. Computerprogrammprodukt, umfassend Code-Befehle, die das Ausführen der Schritte des Bremssimulationsverfahrens nach einem der Ansprüche 9 bis 12 erlauben, wenn das Programm auf einem Computer ausgeführt wird.

14. Computerprogrammprodukt für eine Luftfahrzeugsimulation, umfassend ein Computerprogrammprodukt für eine Bremssimulation nach Anspruch 13.

## Claims

1. A foot-braking simulation device comprising:
- a mechanical braking module (1210) capable of supplying a linear effort value in response to a press on a brake pedal;
- an electromagnetic friction module (1220) comprising a powder brake capable of supplying a friction force value upon the rotation of the motor of the powder brake, in response to said press on the brake pedal; and
- a software calculation module capable of combining the values output by the mechanical braking and electromagnetic friction modules to calculate a control value, and generate a variable force feedback on said brake pedal as a function of the control value.

2. The device according to claim 1, wherein the mechanical braking module comprises a spring capable of providing a linear effort value that is proportional to the stiffness of the spring.

3. The device according to claim 1 or 2, wherein the mechanical braking module comprises a set of springs generating several stiffnesses at different points of the stroke of the brake pedal.

4. The device according to any one of claims 1 to 3, wherein the electromagnetic powder brake receives a variable electric current.

5. The device according to any one of claims 1 to 4, wherein the mechanical braking module comprises a first sensor capable of providing a value representative of the position of the pedal, and a second sensor capable of providing a value representative of the effort applied on the pedal.

6. A rudder bar equipped with two pedals, each pedal comprising a device according to any one of claims 1 to 5.

7. A helicopter simulator having at least one rudder bar equipped with two pedals, each pedal comprising a device according to any one of claims 1 to 5.

8. An aircraft simulator comprising at least one device according to any one of claims 1 to 5.

9. A foot-braking simulation method implemented by computer on a device according to any one of claims 1 to 5, comprising the following steps:
- detecting a press on a brake pedal;
- generating a value relating to a linear effort produced in response to said press on the brake pedal;
- generating a value relating to an electromagnetic friction force produced in response to said press on the brake pedal;
- calculating a control value from the linear effort and electromagnetic friction values; and
- generating a variable force feedback on said brake pedal according to the control value.

10. The method according to claim 9, wherein the step of generating a value relating to a linear effort consists in generating said value from data output by a mechanical braking module coupled to the brake pedal.

11. The method according to claim 9 or 10, wherein the step of generating a value relating an electromagnetic friction force consists in generating said value from data output by an electromagnetic friction module coupled to the brake pedal and to the mechanical braking module.

12. The method according to any one of claims 9 to 11, wherein the step of calculating a control value consists in determining an electric current value that is to be supplied to the electromagnetic brake.

13. A computer program product comprising code instructions for performing the steps of the braking simulation method according to any one of claims 9 to 12, when said program is run on a computer.

14. An aircraft simulation computer program product comprising a braking simulation computer program product according to claim 13.
